# EUROPEAN PATENT SPECIFICATION

(11) **EP 1 955 513 B1**
(45) Date of publication and mention of the grant of the patent: **29.04.2009**
(21) Application number: 06808031.6
(22) Date of filing: 10.11.2006
(51) Int. Cl.: H04L 29/06

(54) **APPARATUS FOR AUTHENTICATING ACCESS OF A CLIENT TERMINAL, WHICH IS NON-COMPLIANT WITH THE PROTOCOLS OF A MOBILE COMMUNICATION NETWORK**
VORRICHTUNG ZUM AUTHENTIFIZIEREN DES ZUGANGS EINES CLIENT-ENDGERÄTS, DAS NICHT DEN PROTOKOLLEN EINES MOBILKOMMUNIKATIONSNETZES ENTSPRICHT
APPAREIL D'AUTHENTIFICATION D'ACCES D'UN TERMINAL CLIENT, NON COMPATIBLE AVEC LES PROTOCOLES D'UN RESEAU DE COMMUNICATION MOBILE

(30) Priority: 30.11.2005 FI 20055633
(43) Date of publication of application: 13.08.2008
(73) Proprietor: Teliasonera AB, 106 63 Stockholm (SE)
(72) Inventor: KORHONEN, Jouni, FI-11100 Riihimäki (FI); SVAHNSTRÖM, Niclas, FI-00510 Helsinki (FI)
(74) Representative: Pursiainen, Timo Pekka
(86) International application number: PCT/FI2006/050490
(87) International publication number: WO 2007/063176

(56) References cited:
- WO-A-20/05094037
- LIOR BRIDGEWATER SYSTEMS A YEGIN SAMSUNG A: "PANA AAA Interworking." IETF STANDARD-WORKING-DRAFT, INTERNET ENGINEERING TASK FORCE, IETF, CH, 25 July 2005 (2005-07-25), pages 1-32, XP015041464 ISSN: 0000-0004
- MAHMOOD H S ET AL: "An architecture for integrating CDMA2000 and 802.11 WLAN networks" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 2073-2077, XP010701282 ISBN: 0-7803-7954-3
- FORSBERG NOKIA Y OHBA (ED) TOSHIBA B PATIL NOKIA H TSCHOFENIG SIEMENS A YEGIN SAMSUNG D: "Protocol for Carrying Authentication for Network Access (PANA)" IETF STANDARD-WORKING-DRAFT, INTERNET ENGINEERING TASK FORCE, IETF, CH, vol. pana, no. 10, 16 July 2005 (2005-07-16), pages 1-78, XP015040900 ISSN: 0000-0004
- BIJWAARD D,VAN DER GAAST S: "The Daidalos project and standardizing NGN in ETSI TISPAN" INTERNET CITATION, [Online] September 2005 (2005-09), pages 1-17, XP002421944 Retrieved from the Internet: URL:http://www.ist-daidalos.org/daten/publ ications/standardisation-docs/05-09-tispan /luc-paper-tispan8.pdf> [retrieved on 2007-02-26]

## Description

### Field of th invention

The present invention relates to the convergence of mobile, wireless and fixed communication networks, and more particularly to access authentication mechanisms used therein.

### Background of the invention

The latest development of communication networks is driven by the aim of convergence; the integration of various kinds of communication and multimedia devices into multi-function devices and the desire of the network operators to use the resources of the existing networks for new services steer the development of communication networks. For example, in the standardization of mobile communication networks the latest actions taken by 3GPP (3^{rd} Generation Partnership Project), i.e. the so-called Release 6, many new aspects and interfaces were designed, which contribute to full IP-based communication, exploiting the benefits of IP for all types of traffic, and enable new access technologies to be used, thus providing for seamless operation between different systems and also with the Internet.

One new feature introduced in the 3GPP Release 6, which is naturally also included in future releases, is the possibility to access the mobile network services over unlicensed spectrum technologies, including Bluetooth and IEEE 802.11. These access schemes are referred to, in connection with 3GPP networks, as Unlicensed Mobile Access (UMA) technology, 3GPP GAN and 3GPP I-WLAN. These features enable terminal users to access telecommunications services provided by 3GPP networks through a WLAN connection, for example. In order to promote the interworking of WLAN terminals with 3GPP systems, the Release 6 includes definitions for common billing and customer care, 3GPP system based access control and charging, and access to 3GPP system packet-switched based services.

A natural next step on the road to converging new access schemes to the 3GPP systems would be providing the Internet broadband customers, i.e. xDSL-subscribers, with an access to the packet-switched services of the 3GPP systems. There are, however, some technical problems to be solved. From the network operator's viewpoint it is desirable that the access authentication of an xDSL-subscriber would be closely interconnected with the existing AAA (Authentication, Authorization, Accounting) system in the operator network. An AAA server of the AAA system is e.g. a RADIUS or a Diameter server, which utilize the subscriber data contained in a HLR and a HSS databases of the 3GPP network. The authentication signalling is carried out using a protocol specific to the used AAA system. Accordingly, in its normal operation the AAA server compares the user identification information of the terminal attempting to access the network to the subscriber data contained in the HLR/HSS, and if accepted, the server will then authorize access to the system. The AAA server will also be notified when the session starts and stops, so that the user can be billed accordingly.

However, the user identification data of an xDSL-subscriber is neither stored in the HLR/HSS nor is it managed by a mobile communication network, but typically by an Internet service provider. Thus, providing access to xDSL-subscribers would typically be carried out either by using an application-layer web-based login scheme for subscriber authentication, which is both inconvenient for the user and insecure for the network operator, or by providing a best-effort service only.

There has been developed a standard called IEEE 802.1x, which is simply a standard for carrying Extensible Authentication Protocol (EAP) over a wired or wireless LAN compatible with IEEE 802 series. EAP is supposed to head off proprietary authentication systems and let everything from passwords to challenge-response tokens and public-key infrastructure certificates all work smoothly. In 802.1 x, EAP messages are packaged in Ethernet frames, and the protocol in 802.1 x is called EAP encapsulation over LANs (EAPOL).

However, IEEE 802.1x includes some disadvantages. IEEE802.1x is a dedicated protocol meant to be used only on IEEE 802 links, hence it only applies to limited link types. Furthermore, the convergence of various types of communication networks makes it practically impossible to use a common link-layer access authentication mechanism. Thus, a dedicated link-layer protocol like IEEE802.1x is no solution for the overall problem of access authentication in the converged network environment. This is one of the reasons why IEEE802.1x has not become very popular in any other networks than WLANs. Accordingly, there is a need for a higher layer (above link layer) access authentication mechanism in the 3GPP networks.

D1: "PANA AAA Interworking", Lior et al. discloses a method for providing interworking between a PANA (Protocol for Carrying Authentication for Network Access) authentication and the AAA protocols. In D1, a PANA Authentication Agent PAA and an AAA client are integrated in a network access server NAS. The PAA communicates with a PANA client PaC PANA-specifically and the AAA client communicates with the AAA server using either Radius or Diameter protocol. D1 discloses in detail how PANA phases are mapped to the AAA phases.

D2: "Policy control and charging for the evolved system architecture", Nortel, 5.-9.9.2005, discloses a system for offering WLAN access to the AAA system of a 3GPP network, wherein a PANA Enforcement Point (PEP) is integrated with a Packet Data Gateway PDG.

### Summary of the invention

Now there is invented an improved telecommunication system, by which access authentication can be provided in versatile network environment. The telecommunication system is characterized by what is stated in the independent claim. Various embodiments of the invention are disclosed in the dependent claims.

According to the inventive idea, there is provided a telecommunication system comprising: a plurality of packet-switched services of a mobile communication network; a network access gateway for providing access to a client terminal;a PANA (Protocol for Carrying Authentication for Network Access) Authentication Agent for verifying a PANA identity of the terminal and an identity of the PANA client associated with the terminal accessing the telecommunication system; an AAA system for authenticating and authorising a user of the client terminal accessing the telecommunication system; wherein the client terminal is connected to the PANA Authentication Agent (PAA) via an xDSL connection; the telecommunication system further comprising: a packet data gateway for providing access further to the packet-switched services of the mobile communication network; and a PANA Enforcement Point, integrated with said packet data gateway, for providing a mutual authentication with a security association between the PANA client and the Enforcement Point and for filtering the inbound and outbound data packets of client terminal, said integrated packet data gateway/PANA Enforcement Point providing an interface between the network access gateway and the packet-switched services of the mobile communication network, wherein the PANA Authentication Agent is arranged to relay an EAP authentication procedure carried inside the PANA authentication to the AAA system for a non-xDSL-specific authentication.

According to an embodiment, the PANA Authentication Agent is integrated with said network access gateway.

According to an embodiment, the PANA Authentication Agent is arranged, in response to a successful authentication in the AAA system, to provide the PANA Enforcement Point with a PANA identity of the terminal, an identity of the PANA client and necessary security policies for filtering the data packets of client terminal.

According to an embodiment, said mutual authentication with a security association between the PANA client and the Enforcement Point is arranged to be carried out as an IKEv2 procedure.

According to an embodiment, an IPSec tunnel is established between the PANA client and the Enforcement Point.

The arrangement according to the invention provides significant advantages. By applying the some of the features of PANA protocol (Protocol for Carrying Authentication for Network Access) to the 3GPP network architecture, the arrangement enables a network-layer based access authentication, which is flexibly connected to the existing AAA system of a 3GPP network. Since the access authentication is carried out on the network-layer, it is suitable for providing access authentication for various kinds of access schemes, whereby any dedicated link-layer protocols are not necessarily needed. Moreover, since the existing AAA system of a 3GPP network is utilized, it is possible to store and retrieve subscriber information of non-mobile customers also in the AAA system, and at the same time, utilize the AAA system for billing the non-mobile customers. Furthermore, the arrangement provides a well-working access authentication for an xDSL subscriber to the services of a 3GPP network, whereby the subscription, as such, needs not to be authenticated, but the authentication can be carried out as client- and terminal-specifically.

### List of drawings

In the following, various embodiments of the invention will be described in more detail with reference to the appended drawings, in which
- Fig. 1: shows a simplified network structure of a 3GPP network;
- Fig. 2: shows a simplified network structure of a 3GPP network according to an embodiment of the invention.

### Description of embodiments

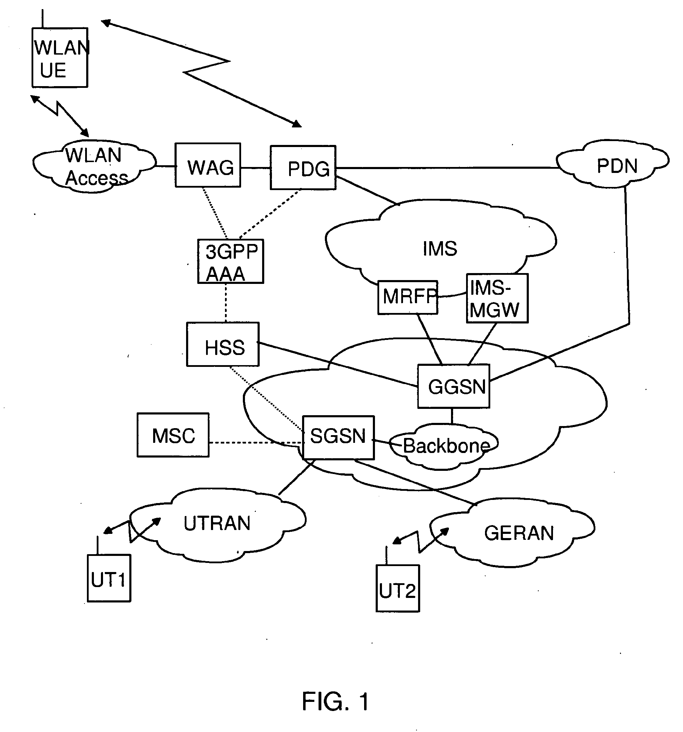

Fig. 1 shows an example of a simplified network structure of a 3GPP network, wherein the features introduced in Release 6 and in earlier releases of the specifications are discussed mainly from the viewpoint of providing access mobile network services over unlicensed spectrum technologies, particularly IEEE 802.11. Accordingly, Fig. 1 mainly illustrates the concept of 3GPP I-WLAN, as defined in Release 6. For a more complete disclosure of the 3GPP network structure and other services according to Release 6, a reference is made to the 3GPP specifications in general, but especially to those mentioned in 3G TR 21.101, version 6.3.0, October 11, 2005.

Even though the invention is illustrated in connection with the 3GPP network structure, it is notified that the invention is equally applicable in any operator network comprising the necessary network elements. Accordingly, the invention can be applied in operator networks according to e.g. 3GGP2 definitions (i.e. CDMA2000) or TiSPAN (Telecoms & Internet converged Services & Protocols for Advanced Networks) definitions. TISPAN's release 1 architecture, which focuses on fixed networks and Internet convergence, is based upon the 3GPP IP Multimedia Subsystem release 6 architecture, but provides a more generalised model able to address a wider variety of network and service requirements.

There has been a significant change of paradigm in the design of mobile networks from circuit-switched domain towards packet-switched domain. The reason for this is the aim to enable full IP-based communication, exploiting the benefits of IP for all types of traffic, and providing for seamless operation between different systems. Accordingly, the main network elements of the 3G network are the gateway nodes GGSN (Gateway GPRS Support Node) and serving nodes SGSN (Serving GPRS Support Node). Typically several serving nodes SGSN are connected to one gateway node GGSN. Both nodes SGSN and GGSN function as routers supporting the mobility of a mobile station, which routers control the mobile system and route data packets to mobile stations regardless of their location and the used protocol. The serving node SGSN is in contact with user terminals through the radio access networks UTRAN and GERAN. A task of the serving node SGSN is to detect mobile stations capable of packet radio connections in its service area, to transmit and receive data packets from said mobile stations and to track the location of the mobile stations in its service area. Records related to packet radio services including subscriber-specific packet data protocol contents are also stored in the home subscriber server HSS.

The gateway node GGSN acts as a gateway between the mobile communication network and the external data network PDN (Packet Data Network). It is worth to notice that, in contrast to the traditional design, the role of the MSC (Mobile Switching Centre) has been reduced to a signalling-only element, while the circuit-switched traffic is processed in and routed via a dedicated media gateway (IMS-MGW), which works together with a Multimedia Resource Function Processor (MRFP).

The 3GPP Release 6 and subsequent releases include definitions for the second phase of the IP Multimedia Subsystem (IMS), comprising all the core network elements for the provision of multimedia services via any IP-based communication in principle. Using the Session Initiation Protocol (SIP), IMS enables mobile operators to offer their subscribers multimedia services based on and built upon Internet applications, services and protocols. The second phase of IMS ensures interworking with circuit-switched networks, non-IMS networks, and with the similar 3GPP2 core network defined for CDMA systems.

A WLAN terminal can access the 3GPP Release 6 network via an external PDN or via the IMS; in either case a 3GPP I-WLAN Packet Data Gateway (PDG) provides the access to 3GPP network services. The WLAN terminal may connect to the PDG directly via a radio interface, or a WLAN access network could be used, whereby there is a wireless access gateway (WAG) between the WLAN access network and the PDG.

If the WLAN terminal comprises user identification information compatible with the 3GPP network (e.g. a USIM card), the PDG or the WAG may perform the access authentication of the WLAN terminal against the 3GPP AAA (Authentication, Authorization, Accounting) system. Thus, the AAA server compares the user identification information of the WLAN terminal attempting to access the network to the subscriber data contained in the HLR/HSS, and if accepted, the server will then authorize access to the system. The AAA server will also be notified when the session starts and stops, so that the user can be billed accordingly. Of course, even if the WLAN terminal comprises user identification information compatible with the 3GPP network, the access authentication may be carried out using IEEE 802.1X.

If the WLAN terminal does not comprise any 3GPP network compatible user identification information, the authentication and authorization of an IEEE 802 compatible terminal may be carried out using IEEE 802.1 X, whereby e.g. the EAP procedure can be performed inside the IEEE 802.1X. Again, even if the WLAN terminal does not comprise any 3GPP network compatible user identification information, the access authentication may be performed against the 3GPP AAA. However, in that case the AAA server does not check the subscriber data in the HLR/HSS, but in some other database containing the user identification information of the WLAN terminal.

In addition to the elements shown in Fig. 1, the 3GPP Release 6 network comprises a great number of other network elements as well, but the appreciation of the invention does not require that these elements should be disclosed herewith.

For the sake of illustrating the aspects of the invention, some basic procedures of the PANA are discussed herein briefly. For a more complete disclosure of the PANA, a reference is made to the IETF Request For Comments (RFC) 4058: *"Protocol for Carrying Authentication for Network Access (PANA) Requirements",* May 2005.

PANA is an authentication protocol for network access; it is not a new security protocol or mechanism, but it rather reuses the known security protocols, such as the EAP, by providing a carrier for the known authentication procedures. As a network-layer protocol, PANA is independent of the underlying access technologies and applicable to any network topology. Once network access is granted to the device, methods used by the device on arbitrating which user can access the network is outside the scope of PANA.

In PANA authentication, a PANA Client (PaC) resides in the host device, which is responsible for providing the credentials to prove its identity for a PANA Authentication Agent (PAA). The PAA is the access network side entity of the protocol, whose responsibility is to verify the identifiers provided by the PANA client. The identifiers include a PANA Client Identifier (PaCl), which may be e.g. a username, and a Device Identifier (DI), which may contain an IP address, a link-layer address, or a switch port number, etc. of a connected device. If the verification carried out by the PAA is successful, it grants network access service to the device associated with the PaC and identified by a DI. The PANA architecture further includes an Enforcement Point (EP), which is a node in the access network, wherein filters are applied on the inbound and outbound traffic of client devices on per-packet-basis. The PAA provides the EP with per client information, such as DI and possibly cryptographic keys, for constructing filters on the EP.

After a device is PANA authenticated, it is authorized for network access, i.e. the authorization of a PaC is verified so that PaC's device may send and receive any IP packets. However, if the network operator requires finer granularity authorization, such as authorization for QoS, a backend authorization infrastructure, like a RADIUS or Diameter based AAA system, may be used to provide such indications to the PAA.

Now according to the invention, PANA authentication can be implemented in an operator network, such as a 3GPP, 3GPP2 or TiSPAN network, such that the packet-switched services of the operator network become available e.g. for an xDSL subscriber. PANA implementation according to the embodiments of the invention utilizes efficiently the existing AAA system of the operator network, whereby any EAP-based authentication can be carried inside PANA authentication procedure.

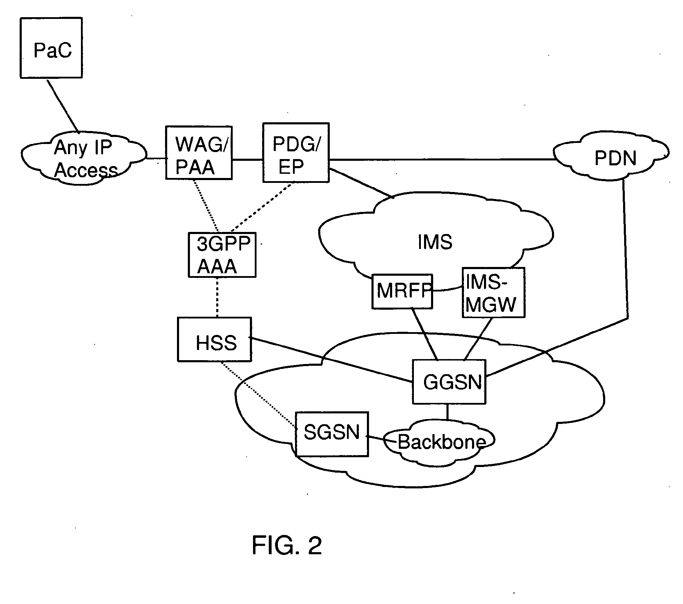

Fig. 2 illustrates a network implementation according to an embodiment. In this implementation, the PANA Authentication Agent (PAA) is integrated with the Wireless Access Gateway (WAG) of the 3GPP I-WLAN arrangement. The Enforcement Point (EP) of the PANA architecture is integrated with the Packet Data Gateway (PDG). The WAG provides an interface to any IP-based access network, via which a terminal device associated with a PANA Client (PaC) may try to establish a connection to the 3GPP network. It is notified that the radio access networks UTRAN and GERAN, and all the circuit-switched elements of a typical 3GPP network naturally belong to the network implementation, even though they have been left from Fig. 2 for the sake of illustrating the embodiment.

The connection establishment is performed briefly as follows. The PaC, which may be associated with a terminal of an xDSL subscriber, for example, contacts the WAG/PAA via the IP access network. The PaC and the PAA carry out PANA authentication e.g. by using EAP as the authentication protocol. In the first step of the PANA authentication, the terminal device associated with the PaC and identified by a DI is verified at the WAG/PAA. The EAP authentication procedure carried inside the PANA authentication is then further relayed from the WAG/PAA to the 3GPP AAA system, whereby the PaC is further authenticated against the 3GPP AAA system (i.e. it is ensured that the subscriber is provisioned with the network service).

If the EAP authentication is successful, the WAG/PAA pushes client information, such as DI and possibly cryptographic keys, and security policies to comply with to the PDG/EP for constructing packet filters on the EP. Then the PaC and the PDG/EP perform mutual authentication between each other, preferably with an IKEv2 (Internet Key Exchange, version 2) procedure, as a result of which an IKE security association (SA) is established between the PaC and the PDG/EP. Thereafter, the PDG/EP can pass the data packets coming from the PaC through, and the terminal device associated with the PaC may be granted at least a limited access to the packet-switched services of the 3GPP network. If necessary, the traffic between the PaC and the PDG/EP may be further secured by an IPSec (IP security) tunnel.

In this embodiment, the PAA is integrated with the WAG, which is a natural place for the PAA, since PANA authentication requires that the PAA and the PaC must be exactly one IP hop away from each other, i.e. there must be no IP routers between the two. Naturally, this limitation can be circumvented using various bridging and tunneling techniques, even if the PAA and the PaC were connected to separate physical links. However, a skilled man appreciates that the location of the PAA is not limited solely to the WAG, but it can be implemented on any network access server (NAS) of the 3GPP network. As shown in Fig. 1, in some cases the PDG may provide network access to a wireless terminal, whereby the PAA can also be integrated together with EP in the PDG. Alternatively, the PAA can be implemented as a separate component.

The interface between the WAG/PAA and the 3GPP AAA system, as well as between the PDG/EP and the 3GPP AAA system, is designated with Wm+, meaning that the interface is compatible with the Wm interface according to the 3GPP Release 6 specifications, however with the enhancements that are required to deliver any PANA-specific information between the elements.

The embodiment described above uses the 3GPP I-WLAN arrangement as an exemplary platform for the PANA functionality. However, the 3GPP Release 6 includes also other network topologies for providing access to the services of a 3GPP network over unlicensed spectrum technologies. These access schemes include also Unlicensed Mobile Access (UMA) and 3GPP GAN (Generic Access Network) topologies, which both comprise a network element similar to the PDG of the 3GPP I-WLAN. Accordingly, then above-described PANA functionality can be implemented in UMA and in GAN in similar manner, whereby the EP can be equally integrate with the Generic Access Network Controller (GANC) of the 3GPP GAN or with the UMA Network Controller (UNC).

The advantages provided by the embodiments described above are apparent to a skilled man. The arrangement enables a network-layer based access authentication, which is flexibly connected to the existing AAA system of an operator network, such as a 3GPP, 3GPP2 or TiSPAN network. Since the access authentication is carried out on the network-layer, it is suitable for providing access authentication for various kinds of access schemes, whereby any dedicated link-layer protocols are not necessarily needed. Moreover, since the existing AAA system of an operator network is utilized, it is possible to store and retrieve subscriber information of non-mobile customers also in the AAA system, and at the same time, utilize the AAA system for billing the non-mobile customers. Furthermore, the implementation of the embodiments requires only incremental enhancements to the existing 3GPP architecture, whereby the backward compatibility of the existing network elements is guaranteed. Especially, the arrangement provides a well-working access authentication for an xDSL subscriber to the services of a 3GPP network, whereby the subscription, as such, needs not to be authenticated, but the authentication can be carried out as client- and terminal-specifically. Naturally, the invention is not limited to providing an access authentication for an xDSL subscriber only, but it can be applied to users of any IP-based, non-cellular network.

It is obvious that the present invention is not limited solely to the above-presented embodiments, but it can be modified within the scope of the appended claims.

## Claims

1. A telecommunication system comprising:
a plurality of packet-switched services of a mobile communication network;
a network access gateway (WAG) for providing access to a client terminal;
a PANA Authentication Agent (PAA) for verifying a PANA identity (DI) of the terminal and an identity (PaCl) of the PANA client (PaC) associated with the terminal accessing the telecommunication system; and
an AAA system for authenticating and authorising a user of the client terminal accessing the telecommunication system;
**characterized in that**
the client terminal is connected to the PANA Authentication Agent (PAA) via an xDSL connection; the telecommunication system further comprising:
a packet data gateway (PDG) for providing access further to the packet-switched services of the mobile communication network; and
a PANA Enforcement Point (EP), integrated with said packet data gateway (PDG), for providing a mutual authentication with a security association (SA) between the PANA client (PaC) and the Enforcement Point (EP) and for filtering the inbound and outbound data packets of client terminal, said integrated packet data gateway/PANA Enforcement Point (PDG/EP) providing an interface between the network access gateway (WAG) and the packet-switched services of the mobile communication network, wherein
the PANA Authentication Agent (PAA) is arranged to relay an EAP authentication procedure carried inside the PANA authentication to the AAA system for an authentication against a 3GPP AAA system.

2. The telecommunication system according to claim 1, **characterized in that**
the PANA Authentication Agent (PAA) is integrated with said network access gateway (WAG).

3. The telecommunication system according to claim 1, **characterized in that**
the PANA Authentication Agent (PAA) is integrated with said packet data gateway (PDG).

4. The telecommunication system according to any of the preceding claims, **characterized in that**
the PANA Authentication Agent (PAA) is arranged, in response to a successful authentication in the AAA system, to provide the PANA Enforcement Point (PDG/EP) with a PANA identity (DI) of the terminal, an identity (PaCl) of the PANA client (PaC) and necessary security policies for filtering the data packets of client terminal.

5. The telecommunication system according to any of the preceding claims, **characterized in that**
said further mutual authentication with a security association (SA) between the PANA client (PaC) and the Enforcement Point (EP) is arranged to be carried out as an IKEv2 procedure.

6. The telecommunication system according to claim 5, **characterized in that**
an IPSec tunnel is established between the PANA client (PaC) and the Enforcement Point (EP).

## Patentansprüche

1. Telekommunikationssystem umfassend:
mehrere paketvermittelte Dienste eines Mobilkommunikationsnetzes;
einen Netzzugangs-Gateway (WAG), um Zugang zu einem Client-Terminal bereitzustellen;
einen PANA Authentifikations Agent (PAA) zum Überprüfen einer PANA-Identität (DI) des Terminals und einer Identität (PaCl) des PANA-Clients (PaC), der dem auf das Telekommunikationssystem zugreifenden Terminal zugeordnet ist; und
ein AAA-System zum Authentifizieren und Autorisieren eines Benutzers des auf das Telekommunikationssystem zugreifenden Client-Terminals;
**dadurch gekennzeichnet, dass**
das Client-Terminal über eine xDSL-Verbindung mit dem PAN Authentifikations Agent (PAA) verbunden ist; wobei das Telekommunikationssytem ferner Folgendes umfasst:
ein Paketdaten-Gateway (PDG), um Zugang weiter zu den paketvermittelten Diensten des Mobilkommunikationsnetzes bereitzustellen; und
einen PANA Durchsetzungspunkt (EP: Enforcement Point), der in den Paketdaten-Gateway (PDG) integriert ist, um eine gegenseitige Authentifzierung mit einer Sicherheitsassoziation (SA) zwischen dem PANA-Client (PaC) und dem Durchsetzungspunkt (EP: Enforcement Point) bereitzustellen und um die eingehenden und ausgehenden Datenpakete des Client-Terminals zu filtern, wobei das integrierte Paketdaten-Gateway/PANA Eforcement Point (PDG/EP) eine Schnittstelle zwischen dem NetzzgangsGateway (WAG) und den paketvermittelten Diensten des Mobilkommunikationsnetzes bereitstellt, wobei
der PANA Authentifikations Agent (PAA) so angeordnet ist, dass er ein in der PANA-Authentifizierung getragenes EAP-Authentifizierungsverfahren für eine Authentifizierung gegenüber einem 3GPP-AAA-System zum AAA-System weiterleitet.

2. Telekommunikationssystem nach Anspruch 1, **dadurch gekennzeichnet, dass**
der PANA Authentifikations Agent (PAA) in das Netzzugangs-Gateway (WAG) integriert ist.

3. Telekommunikationssystem nach Anspruch 1, **dadurch gekennzeichnet, dass**
der PANA Authentifikations Agent (PAA) in das Paketdaten-Gateway (PDG) integriert ist.

4. Telekommunikationssystem nach irgendeinem der vorangehenden Ansprüche, **dadurch gekennzeichnet, dass**
der PANA Authentifikations Agent (PAA) als Reaktion auf eine erfolgreiche Authentifizierung im AAA-System so angeordnet ist, dass der PANA Enforcement Point (PDG/EP) mit einer PANA-Identität (DI) des Terminals, einer Identität (PaCl) des PANA-Clients (PaC) und erforderlichen Sicherheitsgrundsätzen zum Filtern der Datenpakete des Client-Terminals versehen ist.

5. Telekommunikationssystem nach irgendeinem der vorangehenden Ansprüche, **dadurch gekennzeichnet, dass**
die weitere gegenseitige Authentifizierung mit einer Sicherheitsassoziation (SA) zwischen dem PANA-Client (PaC) und dem Durchsetzungspunkt (EP: Enforcement Point) so angeordnet ist, dass sie als ein IKEv2-Verfahren durchzuführen ist.

6. Telekommunikationssystem nach Anspruch 5, **dadurch gekennzeichnet, dass**
ein IPSec-Tunnel zwischen dem PANA-Client (PaC) und dem Durchsetzungspunkt (EP: Enforcement Point) eingerichtet ist.

## Revendications

1. Système de télécommunication comprenant :
une pluralité de services à commutation de paquets d'un réseau de communication mobile ;
une passerelle d'accès au réseau (WAG) pour fournir l'accès à un terminal client ;
un Agent d'Authentification PANA (PAA) pour vérifier une identité PANA (DI) du terminal et une identité (PaCl) du client PANA (PaC) associé avec le terminal accédant au système de télécommunication ; et
un système AAA pour authentifier et autoriser un utilisateur du terminal client accédant au système de télécommunication ;
**caractérisé en ce que**
le terminal client est connecté à l'Agent d'Authentification PANA (PAA) par l'intermédiaire d'une connexion xDSL ; le système de télécommunication comprenant en outre :
une passerelle à commutation de paquets (PDG) pour fournir l'accès en outre aux services à commutation de paquets du réseau de communication mobile ; et
un Point d'Application PANA (EP), intégré avec ladite passerelle à commutation de paquets (PDG), pour fournir une authentification mutuelle avec une association de sécurité (SA) entre le client PANA (PaC) et le Point d'Application PANA (EP) et pour filtrer les paquets de données entrants et sortants du terminal client, ledit passerelle à commutation de paquets/Point d'Application PANA (PDG/EP) fournissant une interface entre la passerelle d'accès au réseau (WAG) et les services à commutation de paquets du réseau de communication mobile, dans lequel
l'Agent d'Authentification PANA (PAA) est agencé pour relayer une procédure d'authentification EAP exécutée à l'intérieur de l'authentification PANA vers le système AAA pour une authentification contre un système 3GPP AAA.

2. Système de télécommunication selon la revendication 1, **caractérisé en ce que**
l'Agent d'Authentification PANA (PAA) est intégré avec ladite passerelle d'accès au réseau (WAG).

3. Système de télécommunication selon la revendication 1, **caractérisé en ce que**
l'Agent d'Authentification PANA (PAA) est intégré avec ladite passerelle à commutation de paquets (PDG).

4. Système de télécommunication selon l'une quelconque des revendications précédentes, **caractérisé en ce que**
l'Agent d'Authentification PANA (PAA) est agencé, en réponse à une authentification réussie dans le système AAA, pour fournir au Point d'Application PANA (PDG/EP) une identité PANA (DI) du terminal, une identité (PaCl) du client PANA (PaC) et les politiques de sécurité nécessaires pour filtrer les paquets de données du terminal client.

5. Système de télécommunication selon l'une quelconque des revendications précédentes, **caractérisé en ce que**
ladite autre authentification mutuelle avec une association de sécurité (SA) entre le client PANA (PaC) et le Point d'Application PANA (EP) est agencée pour être exécutée comme une procédure IKEv2.

6. Système de télécommunication selon la revendication 5, **caractérisé en ce que**
un tunnel IPSec est établi entre le client PANA (PaC) et le Point d'Application PANA (EP).
